# EUROPÄISCHE PATENTSCHRIFT

(11) **EP 2 574 769 B1**
(45) Veröffentlichungstag und Bekanntmachung des Hinweises auf die Patenterteilung: **04.06.2014**
(21) Anmeldenummer: 12185911.0
(22) Anmeldetag: 25.09.2012
(51) Int. Cl.: F02M 55/00, F02M 37/00, F02M 63/02

(54) **Kraftstoffeinspritzeinrichtung für eine Brennkraftmaschine**
Fuel injection device for an internal combustion engine
Dispositif d'injection de carburant pour un moteur à combustion interne

(30) Priorität: 30.09.2011 DE 102011083892
(43) Veröffentlichungstag der Anmeldung: 03.04.2013
(73) Patentinhaber: ROBERT BOSCH GMBH, 70442 Stuttgart (DE)
(72) Erfinder: Ellenschlaeger, Andreas, 70374 Stuttgart (DE); Unrath, Johannes, 71254 Heimerdingen (DE)

(56) Entgegenhaltungen:
- DE-A1-102007 019 281
- DE-A1-102007 056 418
- FR-A1- 2 680 142
- US-A- 4 450 820
- US-A- 5 878 724

## Beschreibung

Die Erfindung betrifft eine Kraftstoffeinspritzeinrichtung einer Brennkraftmaschine nach dem Oberbegriff des unabhängigen Anspruchs.

### Stand der Technik

Eine solche Kraftstoffeinspritzeinrichtung und ihre Funktionsweise ist bereits durch die Schriftreihe Diesel-Speichereinspritzsystem Common-Rail (ISBN-978-3-86522-010-3) der Robert Bosch GmbH oder EP 1195 514 A2 bekannt. Diese Kraftstoffeinspritzeinrichtung weist eine Förderpumpe auf, durch die Kraftstoff aus einem Vorratsbehälter zur Saugseite einer Hochdruckpumpe gefördert wird. Durch die Hochdruckpumpe wird Kraftstoff in einen Hochdruckbereich gefördert, aus dem zumindest mittelbar wenigstens ein Injektor der Kraftstoffeinspritzeinrichtung mit Kraftstoff versorgt wird. Überschüssiger Kraftstoff des Hochdruckbereiches wird durch eine Rücklaufleitung in einen Niederdruckbereich geleitet. Der Kraftstoff im Rücklauf weist aufgrund der Kompressions- und Entspannungsvorgänge im Kraftstoffkreislauf gegenüber dem Kraftstoff aus dem Vorratsbehälter eine deutlich höhere Temperatur auf. Teilweise werden Vorrichtungen zur Kühlung des Kraftstoffes im Rücklauf eingesetzt, dadurch wird die Kraftstofftemperatur reduziert, jedoch erfolgt keine Nutzung der Wärmeenergie. Hohe Kraftstofftemperaturen im Vorratsbehälter führen zu einer Reduzierung der Robustheit des gesamten Einspritzsystems in Bezug auf die Alterung und eine mögliche Ablagerungsbildung durch den Kraftstoff.

Kraftstoffeinspritzeinrichtungen mit Einrichtungen zur Umwandlung von Energie in der Rücklaufleitung sind z.B. aus US 5,878,724 A und DE 10 2007 056 418 A bekannt.

### Offenbarung der Erfindung

Die erfindungsgemäße Kraftstoffeinspritzeinrichtung mit den kennzeichnenden Merkmalen des unabhängigen Anspruchs hat den Vorteil, dass Energie, die sich in einer beliebigen Form im Kraftstoff befindet, durch die Einrichtung zur Umwandlung von Energie so umgewandelt wird, dass sie für mögliche Verbraucher im Kraftfahrzeug leicht nutzbar ist. Ohne die Einrichtung zur Umwandlung von Energie, würde Energie, die z.B. in Form von thermischer Energie oder Bewegungsenergie im Kraftstoff vorhanden ist, ungenutzt verloren gehen.

Mit den Maßnahmen der Unteransprüche sind vorteilhafte Weiterbildungen und Verbesserungen der Erfindung möglich.

Bei der erfindungsgemäßen Kraftstoffeinspritzeinrichtung wird durch die Einrichtung zur Umwandlung von Energie thermische Energie in elektrische Energie umgewandelt, welche im Fahrzeug an vielen unterschiedlichen Stellen durch mindestens einen weiteren Verbraucher einfach genutzt werden kann.

Vorteilhaft ist ein Leitungskreis zur Durchführung eines thermodynamischen Kreisprozesses als Einrichtung zur Umwandlung von Energie, da durch den Leitungskreis die im Kraftstoff vorhandene thermische Energie auf eine besonders effektive Weise in elektrische Energie umgewandelt wird.

Aufgrund des einfachen und platzsparenden Aufbaus bietet sich ein thermoelektrischer Generator als Einrichtung zur Umwandlung von Energie auf vorteilhafte Weise an.

Vorteilhaft ist eine Verbindung der Rücklaufleitung mit einem Injektorrücklauf des wenigstens einen Injektors, und/oder mit einem Rücklauf eines Hochdruckspeichers und/oder mit einem Rücklauf der Hochdruckpumpe, da im Kraftstoff aus diesen hydraulischen Leitungen eine hohe thermische Energie vorhanden ist, und die Energieausbeute durch die Einrichtung zur Umwandlung von Energie besonders hoch ist.

Vorteilhaft ist die Temperaturreduzierung des Kraftstoffs im Vorratsbehälter. Eine Alterung bzw. eine Oxidation des Kraftstoffs, insbesondere von Biodiesel, wird dadurch unterdrückt bzw. verzögert. Die Alterung des Kraftstoffes und Bildung von Ablagerungen erfolgt nach dem Arrheniusprinzip. Eine Robustheitssteigerung gegenüber Ablagerungen stellt sich ein. Ablagerungen aufgrund von Additivunverträglichkeiten werden bei einer geringeren Temperatur reduziert.

### Ausführungsbeispiele

Bevorzugte Ausführungsbeispiele der Erfindung sind in der Zeichnung dargestellt und in der nachfolgenden Beschreibung näher erläutert.

Es zeigen:
Figur 1 eine schematische Darstellung einer Krafftstoffeinspritzeinrichtung einer Brennkraftmaschine und

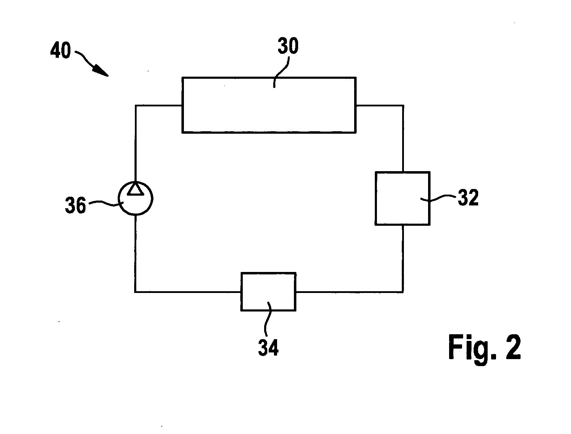

Figur 2 eine schematische Darstellung eines Leitungskreises.

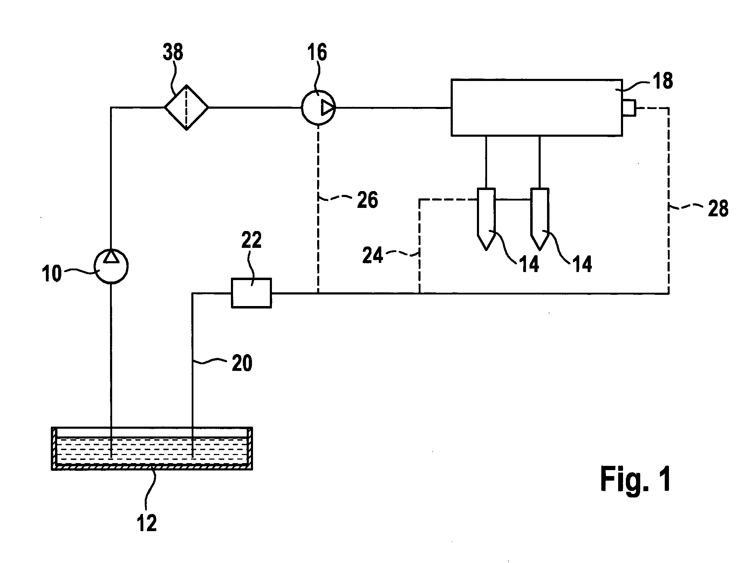

Figur 1 zeigt eine Krafftstoffeinspritzeinrichtung mit einer Förderpumpe 10, die Kraftstoff aus einem Vorratsbehälter 12 ansaugt. Durch die Förderpumpe 10 wird Kraftstoff zur Saugseite wenigstens einer Hochdruckpumpe 16 gefördert, die ebenfalls Bestandteil der Krafftstoffeinspritzeinrichtung ist. Der Antrieb der Förderpumpe 10 kann mechanisch über Zahnrad oder Zahnriemen durch den Motor oder die Hochdruckpumpe 16 erfolgen. Alternativ kann die Förderpumpe 10 einen elektrischen Antrieb aufweisen, der mit veränderlicher Leistung und damit variabler Drehzahl oder konstanter Leistung und Drehzahl betrieben werden kann.

Durch die wenigstens eine Hochdruckpumpe 16 wird Kraftstoff in einen Hochdruckbereich der Krafftstoffeinspritzeinrichtung gefördert, der beispielsweise einen Hochdruckspeicher 18 umfasst. Aus dem Hochdruckbereich werden ein oder mehrere Injektoren 14 mit Kraftstoff versorgt, wobei jedem Zylinder der Brennkraftmaschine ein Injektor 14 zugeordnet ist.

Der Hochdruckbereich umfasst die Teile der Kraftstoffeinspritzeinrichtung, in denen sich Kraftstoff unter hohem Druck befindet und erstreckt sich von der Hochdruckpumpe 16 über den Hochdruckspeicher 18 zu den Injektoren 14 und umfasst auch die hydraulischen Verbindungen zwischen diesen Komponenten.

Als Niederdruckbereich der Kraftstoffeinspritzeinrichtung wird der Bereich, der sich vom Vorratsbehälter 12 über die Förderpumpe 10 bis zur hydraulischen Verbindung zwischen Förderpumpe 10 und Hochdruckpumpe 16 erstreckt, bezeichnet.

Die Förderpumpe 10 kann an der Hochdruckpumpe 16 angeordnet, in diese integriert sein oder entfernt von der Hochdruckpumpe 16 angeordnet sein, beispielsweise im Vorratsbehälter 12 oder in einer hydraulischen Leitung zwischen dem Vorratsbehälter 12 und der Hochdruckpumpe 16.

Die Hochdruckpumpe 16 weist wenigstens ein Pumpenelement auf, das wiederum einen Pumpenkolben aufweist, der in einer Hubbewegung angetrieben wird. Die Hochdruckpumpe 16 kann eine eigene Antriebswelle aufweisen, durch die über einen Nocken oder Exzenter die Hubbewegung des Pumpenkolbens bewirkt wird.

Die Antriebswelle der Hochdruckpumpe 16 wird mechanisch, beispielsweise über ein Getriebe oder einen Riementrieb von der Brennkraftmaschine angetrieben, so dass die Drehzahl der Hochdruckpumpe 16 proportional zur Drehzahl der Brennkraftmaschine ist. Alternativ kann auch vorgesehen sein, dass die Hochdruckpumpe 16 keine eigene Antriebswelle aufweist und die Hubbewegung des Pumpenkolbens durch einen Exzenter oder Nocken einer Welle der Brennkraftmaschine bewirkt wird. Dabei können auch mehrere Hochdruckpumpen 16 vorgesehen sein.

Die Förderpumpe 10 kann entfernt von der wenigstens einen Hochdruckpumpe 16 angeordnet sein, beispielsweise auch im Vorratsbehälter 12. Die Förderpumpe 10 ist dabei über eine hydraulische Leitung mit der Saugseite der wenigstens einen Hochdruckpumpe 16 verbunden. In der hydraulischen Leitung kann ein Kraftstofffilter 38 angeordnet sein, um zu verhindern, dass Schmutzpartikel in die Hochdruckpumpe 16 und in den Hochdruckbereich gelangen.

Durch eine Rücklaufleitung 20 kann überschüssiger Kraftstoff aus dem Hochdruckbereich in den Niederdruckbereich der Kraftstoffeinspritzeinrichtung gelangen.

Die Rücklaufleitung 20 kann mit einem Injektorrücklauf 24 des wenigstens einen Injektors 14 verbunden sein. Alternativ ist eine Verbindung der Rücklaufleitung 20 mit einem Rücklauf 28 des Hochdruckspeichers 18 oder einem Rücklauf der Hochdruckpumpe 26 möglich.

Der Injektorrücklauf 24, der Rücklauf 28 des Hochdruckspeichers 18 und der Rücklauf der Hochdruckpumpe 26 sind in der Figur 1 durch gestrichelte Linien dargestellt, da es sich hierbei um optionale Verbindungen mit der Rücklaufleitung 20 handelt. Die genannten Leitungen(Injektorrücklauf 24, Rücklauf 28 des Hochdruckspeichers 18, Rücklauf der Hochdruckpumpe 26) können auch als Bestandteil der Hochdruckleitung 20 betrachtet werden, da sie den Hochdruckbereich mit dem Niederdruckbereich verbinden.

Je nach Ausführungsform ist es möglich, dass die Rücklaufleitung 20 mit einer, mehreren oder allen Leitungen (Injektorrücklauf 24, Rücklauf 28 des Hochdruckspeichers 18, Rücklauf der Hochdruckpumpe 26), die durch die gestrichelten Linien dargestellt sind, verbunden ist.

In der erfindungsgemäßen Kraftstoffeinspritzeinrichtung wird eine Einrichtung zur Umwandlung von Energie 22 in der Rücklaufleitung 20 angeordnet. Die Einrichtung zur Umwandlung der Energie 22 ermöglicht es Energie, die im Kraftstoff in einer beliebigen Form vorhanden ist, in eine andere Energieform umzuwandeln. Durch die Umwandlung in eine andere Energieform, wird die Energie, die ursprünglich im Kraftstoff gespeichert war, für weitere Verbraucher im Kraftfahrzeug leichter nutzbar gemacht.

In einer alternativen Ausführungsform kann die Einrichtung zur Umwandlung von Energie 22 im Injektorrücklauf 24 und/oder in der Rücklaufleitung 28 des Hochdruckspeichers 18 und/oder in der Rücklaufleitung 26 der Hochdruckpumpe 16 angeordnet werden. Vorteilhaft ist es, die Einrichtung zur Umwandlung von Energie 22 möglichst nah an die Position der Kraftstoffentspannung zu platzieren.

Über die Leitungen geht Wärme verloren, so dass die nutzbare Temperaturdifferenz des Kraftstoffes mit geringer werdendem Abstand der Einrichtung zur Umwandlung von Energie 22 von der Position der Kraftstoffentspannung zunimmt. Der Wirkungsgrad wird durch die Temperatur des Kraftstoffes beeinflusst

Über die Rücklaufleitung 20 wird überschüssiger Kraftstoff aus dem Hochdruckbereich in den Niederdruckbereich geleitet. Ist die Rücklaufleitung 20 mit dem Injektorrücklauf 24 verbunden, kann der Kraftstoff aus einer Leckage der Injektoren 14 stammen oder aus abgesteuerten Kraftstoff, der zur Steuerung der Injektoren 14 genutzt wurde. Ist die Rücklaufleitung 20 mit dem Rücklauf 28 des Hochdruckspeicher 18 verbunden, kann der überschüssige Kraftstoff aus dem Hochdruckspeicher 18 über ein Druckregelventil oder ein Druckbegrenzungsventil abgesteuert werden. Ist die Rücklaufleitung 20 mit dem Rücklauf der Hochdruckpumpe 26 verbunden, handelt es sich beim überschüssigen Kraftstoff um Kraftstoff der durch eine Einrichtung zur Mengenregelung an der Hochdruckpumpe 26 abgesteuert wird.

Durch die Einrichtung zur Umwandlung von Energie 22 in der Rücklaufleitung 20 wird thermische Energie, die im Kraftstoff gespeichert ist, in elektrische Energie umgewandelt, da elektrische Energie einfach von weiteren Verbrauchern im Kraftfahrzeug genutzt werden kann und sich auch gut speichern lässt. Möglich ist auch eine Umwandlung der Energie, die im Kraftstoff gespeichert ist, in mechanische Energie. Die mechanische Energie kann an einen Antriebsstrang übertragen werden oder zum Antreiben eines elektrischen Generators, einer Pumpe oder dergleichen dienen.

Kraftstoff, der dem Hochdruckbereich zugeführt wird, wird aufgrund der Hochdruckpumpe 16 entsprechend der jeweiligen Anforderungen der Brennkraftmaschine verdichtet. Durch den Kompressionsvorgang steigt die Temperatur des Kraftstoffes an. Der verdichtete, aber nicht der Einspritzung in einen Brennraum der Brennkraftmaschine zugeführte Kraftstoff, wird im Injektor 14, dem Druckregel- / begrenzungsventil des Hochdruckspeichers 18 oder durch eine Mengenregelung der Hochdruckpumpe 16 von Hochdruck auf Niederdruck entspannt, wobei sich der Kraftstoff stark erhitzt.

Die thermischen Energie, die im Kraftstoff aufgrund der Verdichtung auf Hochdruck und der teilweisen Entspannung auf Niederdruck gespeichert ist, kann durch die Einrichtung zur Umwandlung von Energie 22 in der Rücklaufleitung 20 und/oder dem Injektorrücklauf 24 und/oder der Rücklaufleitung 26 der Hochdruckpumpe 16 und/oder der Rücklaufleitung 28 des Hochdruckspeichers 18 in eine andere Energieform umgewandelt werden.

In einem ersten Ausführungsbeispiel ist die Einrichtung zur Umwandlung von Energie 22 ein Leitungskreis 40 zur Durchführung eines thermodynamischen Kreisprozesses. Hierbei wird thermische Energie, die im Kraftstoff vorhanden ist, über einen Wärmetauscher 30 an ein Arbeitsmedium im Leitungskreis 40 abgegeben.

Das Arbeitsmedium zirkuliert im Leitungskreis 40 und erfährt aufgrund der thermische Energie, die ihm durch den Wärmetauscher 30 zugeführt wird, eine Zustandsänderung. Durch die Zustandsänderung kann das Arbeitsmedium verdampfen. Das dampfförmige Arbeitsmedium kann eine Expansionsmaschine 32 antreiben. Die Expansionsmaschine 32 weist eine Antriebswelle auf, über die die Expansionsmaschine 32 mit einer Last verbunden ist. Hierdurch kann beispielsweise mechanische Energie an einen Antriebsstrang übertragen werden oder zum Antreiben eines elektrischen Generators, einer Pumpe oder dergleichen dienen.

Die Expansionsmaschine 32 kann als Turbine oder als Kolbenmaschine ausgestaltet sein. Der Expansionsmaschine 32 können im Leitungskreis 40 ein Kondensator 34 und eine Pumpe 36 nachgeschaltet sein. Das verdampfte Arbeitsmedium wird im Kondensator 34 verflüssigt und durch die Pumpe 36 erneut dem Wärmetauscher 30 zugeführt. Durch die Pumpe 36 und die Expansionsmaschine 32 ist eine Durchlaufrichtung des Arbeitsmediums durch den Leitungskreis 40 gegeben. Somit kann dem Kraftstoff durch die Einrichtung zur Umwandlung von Energie 22 fortwährend Wärmeenergie entzogen werden, die in mechanische oder elektrische Energie umgewandelt wird.

In einem zweiten Ausführungsbeispiel ist die Einrichtung zur Umwandlung von Energie 22 ein thermoelektrischer Generator. Thermoelektrische Generatoren nutzen den Temperaturunterschied zwischen einer Wärmequelle und der Umgebungstemperatur zur Stromproduktion. Der thermoelektrische Generator besteht aus zwei miteinander verbundenen Halbleitern mit unterschiedlichen Seebeck-Koeffizienten. Der Seebeck-Koeffizient steht für eine Spannung, die nötig ist, um eine Temperaturdifferenz auszugleichen.

Befindet sich der thermoelektrische Generator an der Rücklaufleitung 20 und/oder dem Injektorrücklauf 24 und/oder der Rücklaufleitung 26 der Hochdruckpumpe 16 und/oder der Rücklaufleitung 28 des Hochdruckspeichers 18, so wird aufgrund der Temperaturdifferenz, die sich am thermoelektrischen Generator einstellt, eine elektrische Spannung erzeugt. Hierbei ist die eine Seite des thermoelektrischen Generators in Verbindung mit dem erwärmten Kraftstoff aus der Rücklaufleitung 20 und/oder dem Injektorrücklauf 24 und/oder der Rücklaufleitung 26 der Hochdruckpumpe 16 und/oder der Rücklaufleitung 28 des Hochdruckspeichers 18 und die andere Seite des thermoelektrischen Generators in Verbindung mit der kühleren Umgebungstemperatur.

Die elektrische Energie, die mit der Einrichtung zur Umwandlung von Energie 22 aus dem Kraftstoff in der Rücklaufleitung 20 erzeugt wurde, wird an weitere Verbraucher oder ein Speichermedium im Kraftfahrzeug geleitet.

Durch die Einrichtung zur Umwandlung von Energie 22 wird die Kraftstofftemperatur in der Rücklaufleitung 20 und somit im Vorratsbehälter 12 reduziert Dadurch erfolgt eine Robustheitssteigerung des gesamten Einspritzsystems in Bezug auf eine Biodiesel- bzw. Kraftstoffalterung oder Additivunverträglichkeit und einer damit verbundenen Ablagerungsbildung.

## Patentansprüche

1. Kraftstoffeinspritzeinrichtung für eine Brennkraftmaschine mit einer Förderpumpe (10), mit wenigstens einer Hochdruckpumpe (16) und mit wenigstens einer Rücklaufleitung (20), wobei durch die Förderpumpe (10) Kraftstoff aus einem Vorratsbehälter (12) zur Saugseite der Hochdruckpumpe (16) gefördert wird, und durch die Hochdruckpumpe (16) Kraftstoff zu einem Hochdruckbereich gefördert wird, wobei aus dem Hochdruckbereich zumindest mittelbar wenigstens ein Injektor (14) versorgt wird, wobei die wenigstens eine Rücklaufleitung (20) den Hochdruckbereich mit einem Niederdruckbereich verbindet wobei eine Einrichtung zur Umwandlung von Energie (22) in der Rücklaufleitung (20) angeordnet ist, **dadurch gekennzeichnet, dass** durch die Einrichtung zur Umwandlung von Energie (22) thermische Energie in elektrische Energie umwandelbar ist.

2. Kraftstoffeinspritzeinrichtung nach Anspruch 1, **dadurch gekennzeichnet dass** die Einrichtung zur Umwandlung von Energie (22) ein thermoelektrischer Generator ist.

3. Kraftstoffeinspritzeinrichtung nach Anspruch 2, **dadurch gekennzeichnet, dass** die Einrichtung zur Umwandlung von Energie (22) ein Leitungskreis (40) zur Durchführung eines thermodynamischen Kreisprozesses ist, in dem ein Wärmetauscher (30) und eine Expansionsmaschine (32) angeordnet sind.

4. Kraftstoffeinspritzeinrichtung nach einem der vorherigen Ansprüche, **dadurch gekennzeichnet, dass** die Rücklaufleitung (20) mit einem Injektorrücklauf (24) des wenigstens einen Injektors (14) verbunden ist.

5. Kraftstoffeinspritzeinrichtung nach einem der vorherigen Ansprüche, **dadurch gekennzeichnet, dass** die Rücklaufleitung (20) mit einem Rücklauf (28) eines Hochdruckspeichers (18) verbunden ist.

6. Kraftstoffeinspritzeinrichtung nach einem der vorherigen Ansprüche, **dadurch gekennzeichnet, dass** die Rücklaufleitung (20) mit einem Rücklauf der Hochdruckpumpe (26) verbunden ist.

## Claims

1. Fuel injection device for an internal combustion engine, having a delivery pump (10), having at least one high-pressure pump (16) and having at least one return line (20), wherein fuel is delivered from a storage tank (12) to the suction side of the high-pressure pump (16) by the delivery pump (10) and fuel is delivered to a high-pressure region by the high-pressure pump (16), wherein a supply is provided at least indirectly to at least one injector (14) from the high-pressure region, wherein the at least one return line (20) connects the high-pressure region to a low-pressure region, wherein a device for converting energy (22) is arranged in the return line (20), **characterized in that** thermal energy can be converted into electrical energy by the device for converting energy (22).

2. Fuel injection device according to Claim 1, **characterized in that** the device for converting energy (22) is a thermoelectric generator.

3. Fuel injection device according to Claim 2, **characterized in that** the device for converting energy (22) is a line circuit (40) for the implementation of a thermodynamic cycle process, in which line circuit there are arranged a heat exchanger (30) and an expansion machine (32).

4. Fuel injection device according to one of the preceding claims, **characterized in that** the return line (20) is connected to an injector return (24) of the at least one injector (14).

5. Fuel injection device according to one of the preceding claims, **characterized in that** the return line (20) is connected to a return (28) of a highpressure accumulator (18).

6. Fuel injection device according to one of the preceding claims, **characterized in that** the return line (20) is connected to a return of the highpressure pump (26).

## Revendications

1. Dispositif d'injection de carburant pour un moteur à combustion interne comprenant une pompe de refoulement (10), avec au moins une pompe haute pression (16) et au moins une conduite de retour (20), du carburant étant refoulé hors d'un réservoir (12) par la pompe de refoulement (10) vers le côté d'aspiration de la pompe haute pression (16), et du carburant étant refoulé par la pompe haute pression (16) jusqu'à une région haute pression, au moins un injecteur (14) étant alimenté au moins indirectement à partir de la région haute pression, l'au moins une conduite de retour (20) reliant la région haute pression à une région basse pression, un dispositif de conversion d'énergie (22) étant disposé dans la conduite de retour (20), **caractérisé en ce que** le dispositif de conversion d'énergie (22) permet de convertir de l'énergie thermique en énergie électrique.

2. Dispositif d'injection de carburant selon la revendication 1, **caractérisé en ce que** le dispositif de conversion d'énergie (22) est un générateur thermoélectrique.

3. Dispositif d'injection de carburant selon la revendication 2, **caractérisé en ce que** le dispositif de conversion d'énergie (22) est un circuit de conduites (40) pour effectuer un processus cyclique thermodynamique dans lequel sont disposés un échangeur de chaleur (30) et une machine d'expansion (32).

4. Dispositif d'injection de carburant selon l'une quelconque des revendications précédentes, **caractérisé en ce que** la conduite de retour (20) est connectée à un retour d'injecteur (24) de l'au moins un injecteur (14).

5. Dispositif d'injection de carburant selon l'une quelconque des revendications précédentes, **caractérisé en ce que** la conduite de retour (20) est connectée à un retour (28) d'un accumulateur haute pression (18).

6. Dispositif d'injection de carburant selon l'une quelconque des revendications précédentes, **caractérisé en ce que** la conduite de retour (20) est connectée à un retour de la pompe haute pression (26).
